# EUROPEAN PATENT SPECIFICATION

(11) **EP 4 455 913 B1**
(45) Date of publication and mention of the grant of the patent: **19.08.2026**
(21) Application number: 24172828.6
(22) Date of filing: 26.04.2024
(51) Int. Cl.: G06F 21/53, G06F 21/55, G06F 21/56, G06F 21/57, G06F 21/60, G06F 21/62, H04W 12/37

(54) **SYSTEMS AND METHODS FOR ENHANCING THE SECURITY OF ISOLATED EXECUTION ENVIRONMENTS OF AN AUTHORIZED USER**
SYSTEME UND VERFAHREN ZUR VERBESSERUNG DER SICHERHEIT VON ISOLIERTEN AUSFÜHRUNGSUMGEBUNGEN EINES AUTORISIERTEN BENUTZERS
SYSTÈMES ET PROCÉDÉS POUR AMÉLIORER LA SÉCURITÉ D'ENVIRONNEMENTS D'EXÉCUTION ISOLÉS D'UN UTILISATEUR AUTORISÉ

(30) Priority: 27.04.2023 RU 2023110978; 19.04.2024 US 202418640467
(43) Date of publication of application: 30.10.2024
(73) Proprietor: AO Kaspersky Lab, Moscow 125212 (RU)
(72) Inventor: YABLOKOV, Victor V., 125212 MOSCOW (RU); FILATOV, Konstantin M., 125212 MOSCOW (RU)
(74) Representative: Chimini, Francesco

(56) References cited:
- EP-A1- 3 422 237
- EP-A1- 4 145 315
- CN-A- 113 553 576
- US-A1- 2013 268 997
- US-B1- 9 455 972

## Description

### FIELD OF TECHNOLOGY

The present disclosure relates to the field of information security, and more specifically to systems and methods for controlling isolated execution environments, in particular, to systems and methods for improving the security of isolated execution environments of an authorized user.

### BACKGROUND

The number of users, the number of companies, and the diversity of activities of users and/or companies continue to grow. At the same time, the number of programs that are created are increasing.

When creating programs, it is important to take into account the programs that interact with the Operating System (OS), which includes a set of system software tools. The OS relies on basic software of a computer, which is part of the Basic Input/Output System (BIOS). In addition, the OS is the basis for higher-level software - including application programs and most services. The OS can be installed on computer systems with different architectures, such as desktop computers, servers, as well as mobile computer systems, which have recently become ubiquitous. The widespread usage of mobile computer systems, in turn, has had a significant impact on growth in the number of tasks performed by these mobile computer systems. Examples of tasks performed include launching and installing of applications, opening and editing files, working with network resources and services, etc. Document EP 3422237 A1 describes a system for policy-based application management on mobile devices, focusing on enterprise mobility management (EMM). The system allows applications to operate under specific policies that control security, features, and resource access. This approach addresses security concerns in BYOD environments by managing applications rather than entire devices, enabling secure data sharing and access to enterprise resources. The disclosure includes methods for managing applications, data sharing, and device interactions, emphasizing the use of policy files to enforce security and operational constraints.

Given the large number of tasks performed by mobile computing systems, there is an acute need for ensuring the security of these devices and implementation of security measures. In particular, there is a need to counter compromise of data by intruders. One of the implementations of such a mechanism to counter compromise of data is to use the Execution Environment. The execution environment includes the infrastructure required to start, execute, and terminate programs. The execution environment refers to the set of software and hardware resources that allow software to run on a computer system. The execution environment is the operating system mechanism that is used to enable programs to run regardless of the programming language used. The execution environment provides for execution program instructions at a high-level (by interacting with the core software library) and low-level (by interacting with the underlying hardware instruction set architecture). Currently, there are situations in which known technologies do not allow identification of vulnerable execution environments and devices. As a result, the user may lose data in an execution environment that is not protected but where the user is authorized.

Therefore, there is a need for a method and a system for enhancing the security of isolated execution environments of authorized users, thereby improving the security of isolated execution environments of an authorized user.

### SUMMARY

Aspects of the disclosure relate to enhancing the security of isolated execution environments of an authorized user.

In one example, a method for enhancing the security of isolated execution environments of an authorized user is disclosed, the method comprising: identifying at least one computer system on which a user is authorized; forming an isolated execution environment of a security application on the at least one identified computer system; detecting at least two isolated execution environments using the isolated execution environment of the security application on the at least one identified computer system; and forming a secure integration of the identified isolated execution environments using integration rules.

In one example, at least one computer system of the at least one computer system on which the user is authorized comprises a mobile computer system.

In one example, the identification of the at least one computer system on which a user is authorized is performed by detecting a computer system that receives and transmits calls over a mobile network.

In one example, the forming of the isolated execution environment of the security application is performed by installing the security application on the identified at least one computer system.

In one example, when forming the isolated execution environment, the security application is provided with a maximum possible number of permissions and accesses.

In one example, after the isolated execution environment is formed, the security application activates the isolated execution environment by running the security application.

In one example, the detection of the at least two isolated execution environments using the isolated execution environment of the security application is performed by detecting at least two applications that are running after the security application was launched.

In one example, the method further comprises: after the detection of the at least two applications that are running after the security application was launched, identifying parameters of the identified isolated execution environments of the at least two applications.

In one example, the forming of the secure integration of the identified isolated execution environments is performed by: creating an integration of the identified isolated environments; and checking for a presence of at least one data access transit in the created integration of the identified isolated execution environments.

In one example, the method further comprises: when the at least one data access transit is identified, applying restrictions based on identified options for the at least one identified data access transit using the integration rules.

In one example, a system is provided for enhancing the security of isolated execution environments of an authorized user, the system comprising at least one memory; and at least one hardware processor coupled with the at least one memory and configured, individually or in combination, to: identify at least one computer system on which a user is authorized; form an isolated execution environment for an execution of a security application on the at least one identified computer system; detect at least two isolated execution environments using the isolated execution environment of the security application on the at least one identified computer system; and form a secure integration of the identified isolated execution environments using integration rules.

The method and system of the present disclosure are designed to improve the security of an OS. The technical result of the present disclosure is to improve the security of isolated execution environments. In one example, the security of the isolated execution environment is achieved by forming a secure integration of isolated execution environments using integration rules.

### BRIEF DESCRIPTION OF THE DRAWINGS

The accompanying drawings, which are incorporated into and constitute a part of this specification, illustrate one or more example aspects of the present disclosure and, together with the detailed description, serve to explain their principles and implementations.
**Fig.** 1 illustrates a block diagram of an example of an interaction of computer systems of a user.
**Fig.** 2 illustrates a block diagram of an exemplary system for enhancing the security of isolated execution environments of an authorized user.
**Fig. 3** illustrates a method for enhancing the security of isolated execution environments of an authorized user.
**Fig.** 4 presents an example of a general purpose computer system on which embodiments of the present disclosure for enhancing the security of isolated execution environments of an authorized user can be implemented.

### DETAILED DESCRIPTION

Exemplary aspects are described herein in the context of a system, method, and a computer program for enhancing the security of isolated execution environments of an authorized user. Those of ordinary skill in the art will realize that the following description is illustrative only and is not intended to be in any way limiting. Other aspects will readily suggest themselves to those skilled in the art having the benefit of the disclosure. Reference will now be made in detail to implementations of the example aspects as illustrated in the accompanying drawings. The same reference indicators will be used to the extent possible throughout the drawings and the following description to refer to the same or like items. The scope of protection for the invention is limited by the attached claims.

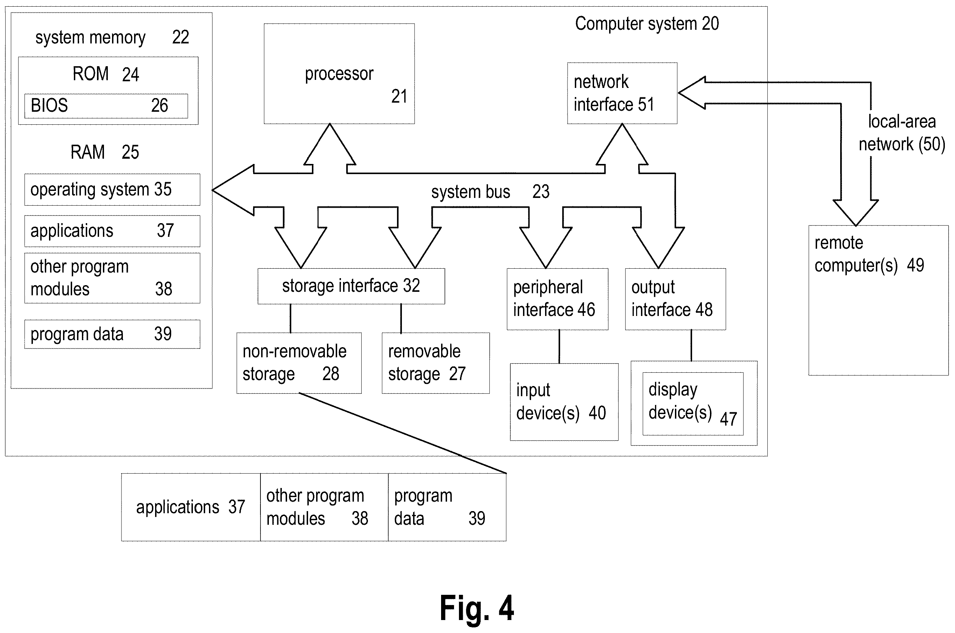

Some or all of the system for enhancing the security of isolated execution environments of authorized users may be implemented on the processor of a general-purpose computer (which, for example, is depicted in **Fig. 4****).** In this case, the components of the system may be realized within a single computing device, or distributed amongst several interconnected computing devices.

In order to readily describe the method of the present disclosure, the following definitions and concepts are first provided below.

Isolated execution environment (or simply sandbox) refers to a dedicated environment for safe execution of computer programs. The isolated execution environment comprises a tightly controlled set of resources for execution, such as disk space or memory, access to a network, the ability to interact with the host operating system or read information from input devices, etc. The isolated execution environment is created and implemented using emulation and virtualization methods.

In computer security, an isolated execution environment refers to a mechanism for secure execution of programs, where secure execution is used: to run unverified code(s) from unknown sources as a means of proactive protection against malicious code; and to detect and analyze applications containing malicious code(s). In addition, the isolated execution environment may be used during a software development process to run early versions of code(s) that may inadvertently damage the system or corrupt settings. In one example, isolated execution environments copy the basic elements of the environment for which the code is written, and allow developers to experiment with undebugged code(s) quickly and painlessly. An isolated execution environment is a restricted environment that gives programs and applications access only to certain resources and prevents problems from affecting the system on which the specified isolated environment is implemented. For example, by running a browser in an isolated execution environment, a user may safely visit various sites on the Internet.

There are three main models for implementing an isolated execution environment: isolation based on full virtualization, isolation based on partial virtualization of the file system and registry, and permission-based isolation. Isolation based on full virtualization provides a fairly high level of protection of the main system at the expense of use of any virtual machine as a protective layer over the guest OS, where the browser and other potentially dangerous applications are installed. Thus, the browser and other potentially dangerous applications through which the user may be harmed are installed.

Isolation based on partial virtualization of the file system and registry allows prevention of attempts to modify data. The prevention of modification of data is accomplished by using duplicate objects of the file system and registry. These duplicate objects are placed in an isolated application execution environment on the working computer system of the user. Attempt to modify the objects of the data will only change the respective copies within the isolated execution environment, while the actual data remains unchanged. Access rights control does not allow one to attack the main system from within the isolated execution environment through the OS interfaces when isolation based on partial virtualization of the file system and registry is used.

Permission-based isolation allows treatment of changes to file system and registry objects in terms of the set of internal permissions of the isolated execution environment's security feature. The isolated execution environment provides more protection against infection of the host system when the set of internal permissions is complete and precise. This approach is a compromise between the convenience of exchanging data among processes within an isolated execution environment, a real system, and the level of protection against applications containing malicious code(s). Access rights control does not make it possible to attack the main system from within the isolated execution environment through the OS interfaces when permission-based isolation is used.

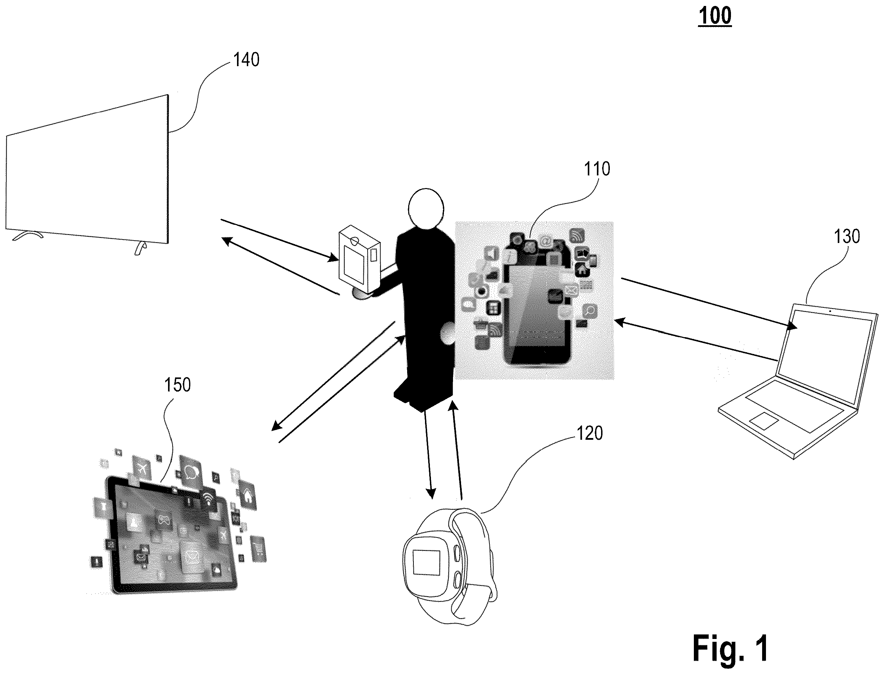

**Fig. 1** illustrates a block diagram of an example of interaction **100** of a computer system of a user. The computer system comprises a primary computer system **110,** such as a smartphone, on which the user performs most of tasks. The primary computer system **110** of the user is the computer system which is the most commonly used mobile computer system on which the user is authorized, and which receives and transmits calls over a mobile network.

Modern smartphones typically have an OS (e.g., Android OS) that uses a separate isolated execution environment for each application that is launched. Monitoring of isolated execution environments allows the user to discover other computer systems with which the user may interact. In the course of carrying out activities, for example, moving around a physical area, the user may use an additional computer system, such as a smart watch **120,** on which another OS (for example, Android Wear OS) is installed, which may use a separate isolated execution environment for each application that is launched. In the course of performing other activities, such as searching the Internet, the user may further use an additional computer system **130,** for example, a laptop on which an operating system is installed (for example, Chrome OS), which uses a separate isolated execution environment for each application that is launched. In the course of another activity, such as transferring video viewing in an application from a smartphone, the user may yet use another additional computer system **140,** such as a smart TV, on which an operating system (e.g., Tizen OS) is installed, which uses a separate isolated execution environment for each application to be launched. In the course of performing another activity, such as resuming document editing, the user may use an additional computer system **150,** such as a tablet on which the operating system is installed (e.g., Ipad OS), which uses a separate isolated execution environment for each application that is launched. All of these operating systems implement isolated execution environment utilizing permission-based isolation. Each mentioned execution environment is isolated and provides security for data access. Applications running in the isolated execution environment have access only to a permission-constrained list of data. Unauthorized access to the mentioned data of another execution environment and the unintended integration of the said data into a single entity for further processing is a security risk to a user. To increase the security of isolated execution environments and to form a secure integration of isolated execution environments of a user, a system of the present disclosure for increasing the security of isolated execution environments may be used.

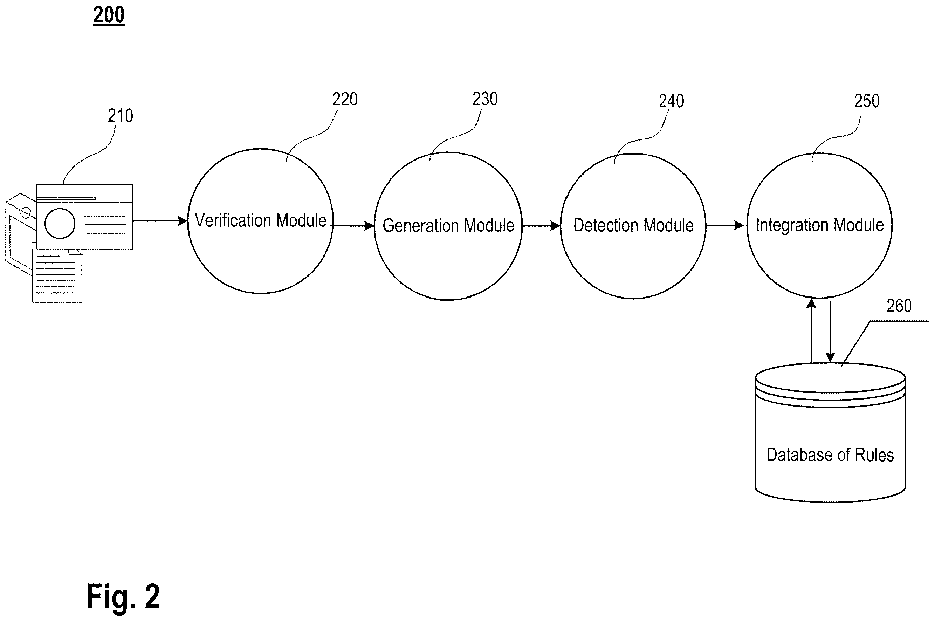

**Fig. 2** illustrates a block diagram of an exemplary system **200** for enhancing the security of isolated execution environments of an authorized user. In one example, the system **200** is implemented using computer systems, for example, a computer, having any number of hardware processors and memory, an example of which is presented in **FIG. 4****.** The system **200** comprises functional and/or hardware modules and tools, which in turn contain instructions to be executed on the hardware processor(s). Below are the options for implementing the modules and tools of the system **200.**

In one example, the system **200** comprises a plurality of available computer systems **210,** a verification module **220,** a generation module **230,** a detection module **240,** an integration module **250,** and a database of rules **260.**

In one example, the verification module **220** is designed to identify at least one computer system of the user on which the user is authorized, and transmit data about the identified computer system to the generation module **230.** For example, the verification module **220** identifies at least one computer system of the user by analyzing a plurality of available computer systems **210.** The analysis includes, in particular, searching for applications that use at least one parameter that identifies the computer system. For instance, the at least one parameter may comprise: an advertising ID, International Mobil Equipment Identity (IMEI), MAC-address, Serial Number, Android ID, and the like. The verification module **220** identifies the primary computer system **110** of the user.

In one example, the verification module **220** verifies an authorization of a user. In one example, the verification of the authorization comprises: determining whether there has been successful login/access to an account by means of which a computer system is managed where at least one isolated execution environment has been deployed using the login and password entered. The presence of the authorization makes it possible to uniquely determine which user is responsible for actions in the computer system. In one example, the verification of the authorization is performed by identifying user accounts on the computer system by, for example, the Android API - AccountManager using the command AccountManager.getAccounts().

Returning to the example illustrated in **Fig. 1****,** the anti-virus program installed on the personal computer of the user analyzes computer systems connected to the local network implemented by the router. As a result of the analysis, a mobile computer system 1 is found, which is the primary computer system **110** on which the user 1 is authorized.

In one example, the generation module **230** is designed to form an isolated execution environment of a security application on the at least one identified computer system, and to transmit data about the isolated execution environment of a security application to the detection module **240.** The generation module **230** forms the isolated execution environment of a security application on at least one identified computer system, such as the computer system **110,** by installing and running a security application, and by setting a maximum possible number of permissions and accesses that the OS provides. In one example, the security application may be an antivirus program or a separate module. Returning to the example illustrated in **Fig. 1****,** on the computer system 1 on which the user 1 is authorized, the generation module **230** installs and runs the security application B. For the operation of the installed security application, an isolated execution environment B is formed.

In one example, the detection module **240** is designed to detect at least two isolated execution environments using the formed isolated execution environment of a security application on at least one identified computer system, wherein the detection of the at least two isolated execution environments is performed prior to the detection of the security application data on the identified isolated execution environments. The data about the at least two detected isolated execution environments is provided to the integration module **250.**

In one example, the detection module **240** detects at least two isolated execution environments using the formed security application execution environment by identifying at least two applications that are running after the security application was launched. In one example, the detection module **240** detects at least one application that transmits data directly to another application or using intermediate data or data transfer method, for example, through a data store (successive access to data) or through intermediate data transformation (wherein one application partially uses the result of processing data from another application), etc.

In one example, after detecting the at least two applications launched following the launch of the security application, the detection module **240** detects the parameters of each of the detected isolated execution environment that are generated in the OS for the operation of said applications.

For example, at least the following data are the parameters for the isolated execution environment provided in the Android OS:
- user ID (unique for each application, the same for applications of the same provider);
- a virtual machine for the process, managed only by a unique user ID (Android OS is a multi-user system based on the Linux kernel, in which each application is represented by a separate user; by default, the system assigns a unique Linux user ID for each application, the ID is used only by the system and is unknown to the application; the system sets permissions on all files in the application so that only the user with the unique Linux user ID assigned to the application is allowed to access them);
- a list of permissions to access user data (part of the application manifest and contains data on what permissions are required for the application to work);
- the core components of the application (part of the application manifest); and
- application resources (part of the application manifest).

For example, for applications provided in the Android OS, at least the following data are parameters:
- an activity performed using an application is a separate screen in the Android OS, a window in a desktop application, or a frame in a Java application that allows placing all user interface components or widgets on the screen;
- time period of activity; an activity has a life cycle in the form of a period of time, in addition, it can be in one of different stages, depending on what happens to the application during user actions; and
- data storage location - a directory (folder) to which the application has access during operation.

Continuing the example from **Fig. 1****,** on the computer system 1 on which the user 1 is authorized, using the security application B running in the isolated execution environment B, the detection module **240** detects the launch of an application 1 and the corresponding isolated execution environment 1. The already launched/running application 2 and the isolated execution environment 2 corresponding thereto are detected through the activity of application 1.

The integration module **250** is designed to form a secure integration of detected isolated execution environments using integration rules stored in database of rules **260.** The integration module **250** forms the secure integration by: creating an integration of detected isolated execution environments, and verifying the security of the created integration of the detected isolated execution environments. In one example, the integration of isolated execution environments is a set of data about applications, isolated execution environments in which applications run, and single-user computer systems on which isolated execution environments are implemented.

Returning to the example of **Fig. 1****,** the integration of isolated environments for the system of **Fig. 1** may be performed as follows:
- user 1, a computer system 1, application B, and isolated execution environment B;
- user 1, computer system 1, application 1, isolated execution environment 1, activity 1, data storage location 1, first activity time period 11: time 1 - time 3;
- user 1, computer system 1, application 2, execution isolated environment 2, activity 1, data storage location 1, activity time period 21: time 1, time2, time 3.

A secure integration of single-user isolated execution environments comprises a type of integration of single-user isolated execution environments in which restrictions are configured or set for applications, isolated execution environments, and computer systems to exclude or prevent data access transit. The term "data access transit" refers to unauthorized transfer of access to data from one application running in one isolated execution environment that has access to another application running in another isolated execution environment that does not have the same access. There are at least three types of data access transit: eavesdropping, snooping, and surveillance.

Eavesdropping (hereinafter referred to as type 1 transit) occurs when one application has permission to use the audio recording function, and the other has permission to use the audio recording and playback function, and the periods of activity of these applications overlap. For example, one application running in an isolated execution environment implemented on the main computer system (smartphone) may have permission to read an SMS message (e.g., an application for people with disabilities), a second application running in an isolated execution environment implemented in an additional computer system (e.g., a smart TV) may have permission to use the microphone at any time (e.g., for voice assistant). In this example, data access transit can occur when an application that does not access data from SMS messages gains data access. An attacker could exploit this transit opportunity.

Snooping (hereinafter referred to as type 2 transit) occurs when one application has permission to use the function of displaying user data on the screen, and the other has permission to use the screen capture function, and the periods of activity of the applications overlap. For example, one application running in an isolated execution environment implemented on the main computer system (e.g., the smartphone) may have a list of permissions that allows a user to view files containing personal data, a second application running in an isolated execution environment implemented on the main computer system (smartphone) may have a list of permissions that allows the user to take screenshots. In this example, a data access transit may occur, when an application that does not have access to the personal data contained in the files gains such access.

Surveillance (hereinafter referred to as type 3 transit) occurs when one application has permission to use a function that processes data from a particular data storage, and another application has permission to use a function that uses data from said storage, and the periods of activity of these applications overlap. For example, one first-vendor application running in an isolated execution environment implemented on a host computer system (e.g., a smartphone) may have permissions to access location data (such as, navigator), another application from the same vendor running in an isolated execution environment implemented on an additional computer system (e.g., a smart speaker) may have a permission to use data received from the microphone at any time (e.g., for voice assistant). Because both applications are developed by the same vendor, it is possible to connect the data that the applications have access to into a single database on the remote side. In this example, data access transit can occur, where an attacker gains access to a remote server of the vendor, uses the data connection, for example, to determine how far away the user is from the premises for the purpose of carrying out a robbery.

In one example, the integration module **250** performs a security check by identifying the presence of data access transit of detected isolated execution environments based on an analysis of the parameters of the isolated execution environments using a security application.

In one example, the integration rule stored in the database of rules **260** comprises a set of conditions. If the above set of conditions has been met, restrictions based on the identified variation for the identified data access transit are formed. After execution (application) of restrictions, it is deemed that the integration of isolated execution environments is secure.

In one example, the integration rule comprises the following set of conditions:
- a presence of type 1 data access transit was revealed;
- the first isolated execution environment is implemented on the main computer system;
- the second isolated execution environment is implemented on an additional computer system;
   and
- an application running in a second execution environment gains unauthorized access to data.

If the above set of conditions has been met, the application launched in the second isolated execution environment during launch or use of the application launched in the first isolated environment, is restricted from being launched or used. After that, integration of the two applications and their isolated execution environments is considered secure.

In another example, the integration rule comprises the following set of conditions:
- a presence of type 2 data access transit was revealed;
- a first isolated execution environment is implemented on the main computer system;
- a second isolated execution environment is implemented on the main computer system; and
- an application running in a second execution environment gains unauthorized access to data.

If the above set of conditions has been met, restriction is applied to the launch and use of the application launched in the second isolated execution environment during launch or use of the application launched in the first isolated environment. After that, integration of the two applications and their isolated execution environments is considered secure.

In yet another example, the integration rule comprises the following set of conditions:
- a presence of type 3 data access transit was revealed;
- a first isolated execution environment is implemented on the main computer system;
- a second isolated execution environment is implemented on an additional computer system;
   and
- both applications running in the first and second execution environment are provided by the same software vendor.

When the above set of conditions is met, the user is alerted that when using the first and second applications at the same time, there is a danger of data access transit by an attacker. After that, integration of the two applications and their isolated execution environment is considered secure.

Returning to the example from **Fig. 1****,** the forming of the secure integration is performed as follows:
- user 1, computer system 1, application B, isolated execution environment B;
- user 1, computer system 1, application 1, isolated execution environment 1, activity 1, storage location 1, activity time period 11: time 1 - time 3; transit 1 application 2;
- user 1, computer system 1, application 2, isolated execution environment 2, activity 1, storage location 1, activity time period 21: time 1, time 2, time 3; transit 1 application 1 activity 1; restriction on the use of the application in period time 1 - to time 3, inclusive.

In one example, the database of rules **260** is intended for storing integration rules. Various types of databases can be used to store and process data, namely: hierarchical (IMS, TDMS, System 2000), network (Cerebrum, Cronos pro, DBVist), relational (DB2, Informix, Microsoft SQL Server), object-oriented (Jasmine, Versant, POET), object-relational (Oracle Database, PostgreSQL, First SQL / J, functional, etc. Rules can be created using machine learning algorithms and automated processing of large amounts of data.

In one example implementation, such as on a home computer on which the user performs tasks using Windows and on which the Kaspersky Total Security application is installed, a search for related devices may be performed, for example, via the Wi-Fi network, to detect an active Android smartphone, thus, determining that the user which successfully login/access to an account of the smartphone opened an application for processing e-mail on the smartphone, and the web e-mail service in the browser on the home computer. From this point on, the smartphone is considered the main computer system and requests permission to install the security application (for example, Kaspersky Internet Security for Android), which implements all or several components of the system **200.** With the help of this security application, the presence of a connection with an additional computer system is determined. The connection may be to a smart TV on Android OS. Then, the security application is installed on the second computer system, and the activity of the first application is detected. For example, the activity of Google Assistant, which is running in the main isolated execution environment implemented on the smartphone, which is currently vocalizing SMS messages, may be detected. The activity of the second application is detected. For example, Yandex.Alice, which is running in an isolated execution environment implemented in an additional computer system, may be detected. Then, the data access transit from Yandex.Alice application to the content of an SMS message that only Google Assistant has authorization to access is registered. Then, the use of the Yandex.Alice application while the Google Assistant application is active is restricted.

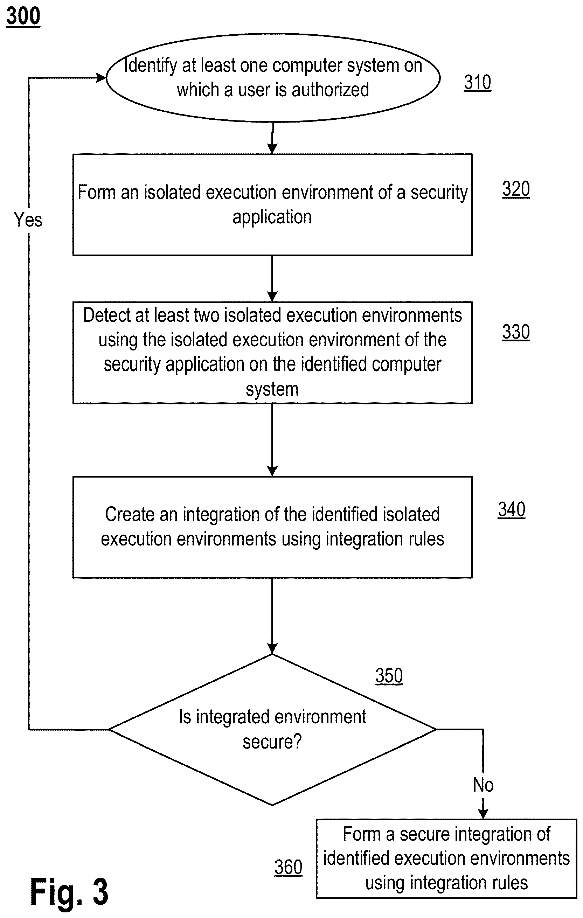

**Fig. 3** illustrates a method **300** for enhancing the security of isolated execution environments of an authorized user. In one example, the method **300** for enhancing the security of isolated execution environments of an authorized user may be implemented on a computing system comprising: a verification module, a generation module, a detection module, and an integration module. For example, the verification module **220,** the generation module **230,** the detection module **240,** and the integration module **250** may be implemented on any number of computing devices, or on a single device based on the application.

In step **310,** via the verification module **220,** method **300** identifies at least one computer system on which a user is authorized, and transmits data about the identified computer system to a generator, e.g., generation module **230.**

In one example, at least one computer system of the at least one computer system on which the user is authorized comprises a mobile computer system.

In one example, the identification of the at least one computer system on which a user is authorized is performed by detecting a computer system that receives and transmits calls over a mobile network.

In step **320,** via the generation module **230,** method **300** forms an isolated execution environment of a security application on the at least one identified computer system, and transmits data about the security application to a detector, e.g., detection module **240.**

In one example, the forming of the isolated execution environment for the execution of the security application is performed by installing the security application on the identified at least one computer system.

In one example, when forming the isolated execution environment, the security application is provided with a maximum possible number of permissions and accesses.

In one example, after the isolated execution environment is formed, the security application activates the isolated execution environment by running the security application.

In step **330,** via the detection module **240,** method **300** detects at least two isolated execution environments using the isolated execution environment of security application on the at least one identified computer system, and transmits data about the identified at least two isolated execution environments to an integrator, e.g., integration module **250.**

In one example, the detection of the at least two isolated execution environments using the isolated execution environment of the security application is performed by detecting at least two application that are running after the security application was launched.

In one example, after the detection of the at least two application that are running after the security application was launched, method **300** identifies parameters of the identified isolated execution environment of the at least two applications.

In step **340,** via the integration module **250,** method **300** creates an integration of the identified isolated execution environments using integration rules.

In optional step **350,** via the integration module **250,** method **300** performs a security check on the created integration. When the security check determines that the integration is unsecure, the method proceeds to step **360.** If the security check determines that the integration of execution environments is secure, then method **300** terminates or returns to step **310.**

In step **360,** via the integration module **250,** method **300** forms a secure integration of identified execution environments using integration rules. The method then terminates or returns to step **310.**

In one example, the forming of the secure integration of the identified isolated execution environments is performed by:
- creating an integration of the identified isolated execution environments; and
- checking for a presence of at least one data access transit in the created integration of the identified isolated execution environments using the integration rules.

In one example, when the at least one data access transit is identified, applying restrictions based on identified options for the at least one identified data access transit using the integration rules, e.g., rules obtained from the database of rules **260.**

**Fig. 4** is a block diagram illustrating a computer system **20** on which examples of systems and methods for enhancing the security of isolated execution environments of an authorized user may be implemented. The computer system **20** can be in the form of multiple computing devices, or in the form of a single computing device, for example, a desktop computer, a notebook computer, a laptop computer, a mobile computing device, a smart phone, a tablet computer, a server, a mainframe, an embedded device, and other forms of computing devices.

As shown, the computer system **20** includes a central processing unit (CPU) **21,** a system memory **22,** and a system bus **23** connecting the various system components, including the memory associated with the central processing unit **21.** The system bus **23** may comprise a bus memory or bus memory controller, a peripheral bus, and a local bus that is able to interact with any other bus architecture. Examples of the buses may include PCI, ISA, PCI-Express, HyperTransport^{™}, InfiniBand^{™}, Serial ATA, I²C, and other suitable interconnects. The central processing unit **21** (also referred to as a processor) can include a single or multiple sets of processors having single or multiple cores. The processor **21** may execute one or more computerexecutable code implementing the techniques of the present disclosure. The system memory **22** may be any memory for storing data used herein and/or computer programs that are executable by the processor **21.** The system memory **22** may include volatile memory such as a random access memory (RAM) **25** and non-volatile memory such as a read only memory (ROM) **24,** flash memory, etc., or any combination thereof. The basic input/output system (BIOS) **26** may store the basic procedures for transfer of information between elements of the computer system **20,** such as those at the time of loading the operating system with the use of the ROM **24.**

The computer system **20** may include one or more storage devices such as one or more removable storage devices **27,** one or more non-removable storage devices **28,** or a combination thereof. The one or more removable storage devices **27** and non-removable storage devices **28** are connected to the system bus **23** via a storage interface **32.** In an example, the storage devices and the corresponding computer-readable storage media are power-independent modules for the storage of computer instructions, data structures, program modules, and other data of the computer system **20.** The system memory **22,** removable storage devices **27,** and non-removable storage devices **28** may use a variety of computer-readable storage media. Examples of computer-readable storage media include machine memory such as cache, SRAM, DRAM, zero capacitor RAM, twin transistor RAM, eDRAM, EDO RAM, DDR RAM, EEPROM, NRAM, RRAM, SONOS, PRAM; flash memory or other memory technology such as in solid state drives (SSDs) or flash drives; magnetic cassettes, magnetic tape, and magnetic disk storage such as in hard disk drives or floppy disks; optical storage such as in compact disks (CD-ROM) or digital versatile disks (DVDs); and any other medium which may be used to store the desired data and which can be accessed by the computer system **20.**

The system memory **22,** removable storage devices **27,** and non-removable storage devices **28** of the computer system **20** may be used to store an operating system **35,** additional program applications **37,** other program modules **38,** and program data **39.** The computer system **20** may include a peripheral interface **46** for communicating data from input devices **40,** such as a keyboard, mouse, stylus, game controller, voice input device, touch input device, or other peripheral devices, such as a printer or scanner via one or more I/O ports, such as a serial port, a parallel port, a universal serial bus (USB), or other peripheral interface. A display device **47** such as one or more monitors, projectors, or integrated display, may also be connected to the system bus **23** across an output interface **48,** such as a video adapter. In addition to the display devices **47,** the computer system **20** may be equipped with other peripheral output devices (not shown), such as loudspeakers and other audiovisual devices.

The computer system **20** may operate in a network environment, using a network connection to one or more remote computers **49.** The remote computer (or computers) **49** may be local computer workstations or servers comprising most or all of the aforementioned elements in describing the nature of a computer system **20.** Other devices may also be present in the computer network, such as, but not limited to, routers, network stations, peer devices or other network nodes. The computer system **20** may include one or more network interfaces **51** or network adapters for communicating with the remote computers **49** via one or more networks such as a local-area computer network (LAN) **50,** a wide-area computer network (WAN), an intranet, and the Internet. Examples of the network interface **51** may include an Ethernet interface, a Frame Relay interface, SONET interface, and wireless interfaces.

Embodiments of the present disclosure may be a system, a method, and/or a computer program product. The computer program product may include a computer readable storage medium (or media) having computer readable program instructions thereon for causing a processor to carry out embodiments of the present disclosure.

The computer readable storage medium can be a tangible device that can retain and store program code in the form of instructions or data structures that can be accessed by a processor of a computing device, such as the computing system **20.** The computer readable storage medium may be an electronic storage device, a magnetic storage device, an optical storage device, an electromagnetic storage device, a semiconductor storage device, or any suitable combination thereof. By way of example, such computer-readable storage medium can comprise a random access memory (RAM), a read-only memory (ROM), EEPROM, a portable compact disc read-only memory (CD-ROM), a digital versatile disk (DVD), flash memory, a hard disk, a portable computer diskette, a memory stick, a floppy disk, or even a mechanically encoded device such as punch-cards or raised structures in a groove having instructions recorded thereon. As used herein, a computer readable storage medium is not to be construed as being transitory signals per se, such as radio waves or other freely propagating electromagnetic waves, electromagnetic waves propagating through a waveguide or transmission media, or electrical signals transmitted through a wire.

Computer readable program instructions described herein can be downloaded to respective computing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network interface in each computing device receives computer readable program instructions from the network and forwards the computer readable program instructions for storage in a computer readable storage medium within the respective computing device.

Computer readable program instructions for carrying out operations of the present disclosure may be assembly instructions, instruction-set-architecture (ISA) instructions, machine instructions, machine dependent instructions, microcode, firmware instructions, state-setting data, or either source code or object code written in any combination of one or more programming languages, including an object oriented programming language, and conventional procedural programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a LAN or WAN, or the connection may be made to an external computer (for example, through the Internet). In some examples, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform examples of the present disclosure.

In various examples, the systems and methods described in the present disclosure can be addressed in terms of modules. The term "module" as used herein refers to a real-world device, component, or arrangement of components implemented using hardware, such as by an application specific integrated circuit (ASIC) or FPGA, for example, or as a combination of hardware and software, such as by a microprocessor system and a set of instructions to implement the module's functionality, which (while being executed) transform the microprocessor system into a specialpurpose device. A module may also be implemented as a combination of the two, with certain functions facilitated by hardware alone, and other functions facilitated by a combination of hardware and software. In certain implementations, at least a portion, and in some cases, all, of a module may be executed on the processor of a computer system (such as the one described in greater detail in **Fig. 4** above). Accordingly, each module may be realized in a variety of suitable configurations, and should not be limited to any particular implementation exemplified herein.

In the interest of clarity, not all of the routine features of the embodiments are disclosed herein. It would be appreciated that in the development of any actual implementation of the present disclosure, numerous implementation-specific decisions must be made in order to achieve the developer's specific goals, and these specific goals will vary for different implementations and different developers. It is understood that such a development effort might be complex and timeconsuming, but would nevertheless be a routine undertaking of engineering for those of ordinary skill in the art, having the benefit of this disclosure.

Furthermore, it is to be understood that the phraseology or terminology used herein is for the purpose of description and not of restriction, such that the terminology or phraseology of the present specification is to be interpreted by the skilled in the art in light of the teachings and guidance presented herein, in combination with the knowledge of those skilled in the relevant art(s). Moreover, it is not intended for any term in the specification or claims to be ascribed an uncommon or special meaning unless explicitly set forth as such.

The various aspects disclosed herein encompass present and future known equivalents to the known modules referred to herein by way of illustration. Moreover, while aspects and applications have been shown and described, it would be apparent to those skilled in the art having the benefit of this disclosure that many more modifications than mentioned above are possible without departing from the inventive concepts disclosed herein.

## Claims

1. A method for enhancing the security of isolated execution environments of an authorized user, the method comprising:
identifying at least one computer system on which a user is authorized;
forming an isolated execution environment for an execution of a security application on the at least one identified computer system, wherein the security application is configured to manage and secure isolated execution environments through integration rules;
detecting at least two isolated execution environments using the isolated execution environment of the security application on the at least one identified computer system; and
forming a secure integration of the detected isolated execution environments using the integration rules, wherein the integration rules are applied to implement identifying and restricting unauthorized data access transit types to provide secure data handling across the isolated execution environments.

2. The method according to claim 1, wherein at least one computer system of the at least one computer system on which the user is authorized comprises a mobile computer system.

3. The method according to any of claims 1 to 2, wherein the identification of the at least one computer system on which a user is authorized is performed by detecting a computer system that receives and transmits calls over a mobile network.

4. The method according to any of claims 1 to 3, wherein the forming of the isolated execution environment for the execution of the security application is performed by installing the security application on the identified at least one computer system.

5. The method according to any of claims 1 to 4, wherein when forming the isolated execution environment, the security application is provided with a maximum possible number of permissions and accesses.

6. The method according to any of claims 1 to 5, wherein, after the isolated execution environment is formed, the security application activates the isolated execution environment by running the security application.

7. The method according to any of claims 1 to 6, wherein the detection of the at least two isolated execution environments using the isolated execution environment of the security application is performed by detecting at least two application that are running after the security application was launched.

8. The method according to claim 7, the method further comprises:
after the detection of the at least two applications that are running after the security application was launched, identifying parameters of the detected isolated execution environment of the at least two applications.

9. The method according to any of claims 1 to 8, wherein the forming of the secure integration of the detected isolated execution environments is performed by:
creating an integration of the detected isolated execution environments; and
checking for a presence of at least one data access transit in the created integration of the detected isolated execution environments.

10. The method according to claim 9, the method further comprising:
when the at least one data access transit is identified, applying restrictions based on identified options for the at least one identified data access transit using the integration rules.

11. A system for enhancing the security of isolated execution environments of an authorized user, comprising:
at least one memory; and
at least one hardware processor coupled with the at least one memory and configured, individually or in combination, to:
identifies at least one computer system on which a user is authorized;
forms an isolated execution environment for an execution of a security application on the at least one identified computer system, wherein the security application is configured to manage and secure isolated execution environments through integration rules;
detects at least two isolated execution environments using the isolated execution environment of the security application on the at least one identified computer system; and
forms a secure integration of the detected isolated execution environments using the integration rules, wherein the integration rules are applied to implement identifying and restricting unauthorized data access transit types to provide secure data handling across the isolated execution environments.

12. The system according to claim 11, wherein when forming the isolated execution environment, the security application is provided with a maximum possible number of permissions and accesses.

13. The system according to any of claims 11 to 12, wherein the detection of the at least two isolated execution environments using the isolated execution environment of the security application is performed by detecting at least two application that are running after the security application was launched.

14. The system according to claim 13, the at least one hardware processor coupled with the at least one memory further configured to:
after the detection of the at least two application that are running after the security application was launched, identify parameters of the detected isolated execution environment of the at least two applications.

15. The system according to any of claims 11 to 14, wherein the forming of the secure integration of the detected isolated execution environments is performed by:
creating an integration of the detected isolated execution environments;
checking for a presence of at least one data access transit in the created integration of the detected isolated execution environments; and
when the at least one data access transit is identified, apply restrictions based on identified options for the at least one identified data access transit using the integration rules.

## Patentansprüche

1. Verfahren zur Verbesserung der Sicherheit von isolierten Ausführungsumgebungen eines autorisierten Benutzers, wobei das Verfahren umfasst:
- Identifizieren mindestens eines Computersystems, auf dem ein Benutzer autorisiert ist;
- Bilden einer isolierten Ausführungsumgebung für eine Ausführung einer Sicherheitsanwendung auf dem mindestens einen identifizierten Computersystem, wobei die Sicherheitsanwendung so konfiguriert ist, dass sie isolierte Ausführungsumgebungen durch Integrationsregeln verwaltet und sichert;
- Erfassen von mindestens zwei isolierten Ausführungsumgebungen unter Verwendung der isolierten Ausführungsumgebung der Sicherheitsanwendung auf dem mindestens einen identifizierten Computersystem; und
- Bilden einer sicheren Integration der erfassten isolierten Ausführungsumgebungen unter Verwendung der Integrationsregeln, wobei die Integrationsregeln angewendet werden, um das Identifizieren und Einschränken unbefugter Datenzugriffstransittypen zu implementieren, um eine sichere Datenhandhabung über die isolierten Ausführungsumgebungen hinweg bereitzustellen.

2. Verfahren nach Anspruch 1, wobei mindestens ein Computersystem des mindestens einen Computersystems, auf dem der Benutzer autorisiert ist, ein mobiles Computersystem umfasst.

3. Verfahren nach einem der Ansprüche 1 bis 2, wobei die Identifizierung des mindestens einen Computersystems, auf dem ein Benutzer autorisiert ist, durch Erfassen eines Computersystems durchgeführt wird, das Anrufe über ein Mobilfunknetz empfängt und überträgt.

4. Verfahren nach einem der Ansprüche 1 bis 3, wobei das Bilden der isolierten Ausführungsumgebung für die Ausführung der Sicherheitsanwendung durch Installieren der Sicherheitsanwendung auf dem identifizierten mindestens einen Computersystem durchgeführt wird.

5. Verfahren nach einem der Ansprüche 1 bis 4, wobei beim Bilden der isolierten Ausführungsumgebung die Sicherheitsanwendung mit einer maximal möglichen Anzahl von Berechtigungen und Zugriffen versehen wird.

6. Verfahren nach einem der Ansprüche 1 bis 5, wobei die Sicherheitsanwendung nach dem Bilden der isolierten Ausführungsumgebung die isolierte Ausführungsumgebung durch Ausführen der Sicherheitsanwendung aktiviert.

7. Verfahren nach einem der Ansprüche 1 bis 6, wobei die Erfassung der mindestens zwei isolierten Ausführungsumgebungen unter Verwendung der isolierten Ausführungsumgebung der Sicherheitsanwendung durch Erfassen von mindestens zwei Anwendungen durchgeführt wird, die nach dem Start der Sicherheitsanwendung ausgeführt werden.

8. Verfahren nach Anspruch 7, wobei das Verfahren ferner umfasst:
- nach der Erfassung der mindestens zwei Anwendungen, die nach dem Start der Sicherheitsanwendung ausgeführt werden, Identifizieren von Parametern der erfassten isolierten Ausführungsumgebung der mindestens zwei Anwendungen.

9. Verfahren nach einem der Ansprüche 1 bis 8, wobei das Bilden der sicheren Integration der erfassten isolierten Ausführungsumgebungen durchgeführt wird durch:
- Erstellen einer Integration der erfassten isolierten Ausführungsumgebungen; und
- Prüfen auf Vorhandensein mindestens eines Datenzugriffstransits in der erstellten Integration der erfassten isolierten Ausführungsumgebungen.

10. Verfahren nach Anspruch 9, wobei das Verfahren ferner umfasst:
- wenn der mindestens eine Datenzugriffstransit identifiziert wird, Anwenden von Einschränkungen basierend auf identifizierten Optionen für den mindestens einen identifizierten Datenzugriffstransit unter Verwendung der Integrationsregeln.

11. System zur Verbesserung der Sicherheit von isolierten Ausführungsumgebungen eines autorisierten Benutzers, umfassend:
- mindestens einen Speicher; und
- mindestens einen Hardwareprozessor, der mit dem mindestens einen Speicher gekoppelt ist und einzeln oder in Kombination konfiguriert ist zum:
- Identifizieren mindestens eines Computersystems, auf dem ein Benutzer autorisiert ist;
- Bilden einer isolierten Ausführungsumgebung für eine Ausführung einer Sicherheitsanwendung auf dem mindestens einen identifizierten Computersystem, wobei die Sicherheitsanwendung so konfiguriert ist, dass sie isolierte Ausführungsumgebungen durch Integrationsregeln verwaltet und sichert;
- Erfassen von mindestens zwei isolierten Ausführungsumgebungen unter Verwendung der isolierten Ausführungsumgebung der Sicherheitsanwendung auf dem mindestens einen identifizierten Computersystem; und
- Bilden einer sicheren Integration der erfassten isolierten Ausführungsumgebungen unter Verwendung der Integrationsregeln, wobei die Integrationsregeln angewendet werden, um das Identifizieren und Einschränken unbefugter Datenzugriffstransittypen zu implementieren, um eine sichere Datenhandhabung über die isolierten Ausführungsumgebungen hinweg bereitzustellen.

12. System nach Anspruch 11, wobei beim Bilden der isolierten Ausführungsumgebung die Sicherheitsanwendung mit einer maximal möglichen Anzahl von Berechtigungen und Zugriffen versehen wird.

13. System nach einem der Ansprüche 11 bis 12, wobei die Erfassung der mindestens zwei isolierten Ausführungsumgebungen unter Verwendung der isolierten Ausführungsumgebung der Sicherheitsanwendung durch Erfassen von mindestens zwei Anwendungen durchgeführt wird, die nach dem Start der Sicherheitsanwendung ausgeführt werden.

14. System nach Anspruch 13, wobei der mindestens eine Hardwareprozessor, der mit dem mindestens einen Speicher gekoppelt ist, ferner konfiguriert ist zum:
- nach der Erfassung der mindestens zwei Anwendungen, die nach dem Start der Sicherheitsanwendung ausgeführt werden, Identifizieren von Parametern der erfassten isolierten Ausführungsumgebung der mindestens zwei Anwendungen.

15. System nach einem der Ansprüche 11 bis 14, wobei das Bilden der sicheren Integration der erfassten isolierten Ausführungsumgebungen durchgeführt wird durch:
- Erstellen einer Integration der erfassten isolierten Ausführungsumgebungen;
- Prüfen auf Vorhandensein mindestens eines Datenzugriffstransits in der erstellten Integration der erfassten isolierten Ausführungsumgebungen; und
- wenn der mindestens eine Datenzugriffstransit identifiziert wird, Anwenden von Einschränkungen basierend auf identifizierten Optionen für den mindestens einen identifizierten Datenzugriffstransit unter Verwendung der Integrationsregeln.

## Revendications

1. Procédé pour améliorer la sécurité des environnements d'exécution isolés d'un utilisateur autorisé, le procédé comprenant :
- Identifier au moins un système informatique sur lequel un utilisateur est autorisé;
- Former un environnement d'exécution isolé pour une exécution d'une application de sécurité sur le au moins un système informatique identifié, dans lequel l'application de sécurité est configurée pour gérer et sécuriser des environnements d'exécution isolés grâce à des règles d'intégration ;
- Détecter au moins deux environnements d'exécution isolés à l'aide de l'environnement d'exécution isolé de l'application de sécurité sur l'au moins un système informatique identifié ; et
- Former une intégration sécurisée des environnements d'exécution isolés détectés à l'aide des règles d'intégration, dans laquelle les règles d'intégration sont appliquées pour mettre en œuvre l'identification et la restriction des types de transit d'accès non autorisé aux données afin de fournir un traitement sécurisé des données dans les environnements d'exécution isolés.

2. Procédé selon la revendication 1, dans lequel au moins un système informatique du au moins un système informatique sur lequel l'utilisateur est autorisé comprend un système informatique mobile.

3. Procédé selon l'une quelconque des revendications 1 à 2, dans lequel l'identification du au moins un système informatique sur lequel un utilisateur est autorisé est effectuée en détectant un système informatique qui reçoit et transmet des appels sur un réseau mobile.

4. Procédé selon l'une quelconque des revendications 1 à 3, dans lequel la formation de l'environnement d'exécution isolé pour l'exécution de l'application de sécurité est effectuée en installant l'application de sécurité sur le au moins un système informatique identifié.

5. Procédé selon l'une quelconque des revendications 1 à 4, dans lequel lors de la formation de l'environnement d'exécution isolé, l'application de sécurité est dotée d'un nombre maximum possible d'autorisations et d'accès.

6. Procédé selon l'une quelconque des revendications 1 à 5, dans lequel, après la formation de l'environnement d'exécution isolé, l'application de sécurité active l'environnement d'exécution isolé en exécutant l'application de sécurité.

7. Procédé selon l'une quelconque des revendications 1 à 6, dans lequel la détection des au moins deux environnements d'exécution isolés à l'aide de l'environnement d'exécution isolé de l'application de sécurité est effectuée en détectant au moins deux applications qui sont en cours d'exécution après le lancement de l'application de sécurité.

8. Procédé selon la revendication 7, le procédé comprenant en outre :
- Après la détection des au moins deux applications qui sont en cours d'exécution après le lancement de l'application de sécurité, identifier les paramètres de l'environnement d'exécution isolé détecté des au moins deux applications.

9. Procédé selon l'une quelconque des revendications 1 à 8, dans lequel la formation de l'intégration sécurisée des environnements d'exécution isolés détectés est effectuée par :
- Créer une intégration des environnements d'exécution isolés détectés ; et
- Vérifier la présence d'au moins un transit d'accès aux données dans l'intégration créée des environnements d'exécution isolés détectés.

10. Procédé selon la revendication 9, le procédé comprenant en outre :
- Lorsque le au moins un transit d'accès aux données est identifié, appliquer des restrictions basées sur des options identifiées pour le au moins un transit d'accès aux données identifié en utilisant les règles d'intégration.

11. Système pour améliorer la sécurité des environnements d'exécution isolés d'un utilisateur autorisé, comprenant :
- Au moins une mémoire ; et
- Au moins un processeur matériel couplé à l'au moins une mémoire et configuré, individuellement ou en combinaison, pour :
- Identifie au moins un système informatique sur lequel un utilisateur est autorisé ;
- Forme un environnement d'exécution isolé pour une exécution d'une application de sécurité sur le au moins un système informatique identifié, dans lequel l'application de sécurité est configurée pour gérer et sécuriser des environnements d'exécution isolés au moyen de règles d'intégration;
- Détecte au moins deux environnements d'exécution isolés à l'aide de l'environnement d'exécution isolé de l'application de sécurité sur l'au moins un système informatique identifié ; et
- Forme une intégration sécurisée des environnements d'exécution isolés détectés à l'aide des règles d'intégration, dans laquelle les règles d'intégration sont appliquées pour mettre en œuvre l'identification et la restriction Des types de transit d'accès aux données non autorisés pour fournir un traitement sécurisé des données dans les environnements d'exécution isolés.

12. Système selon la revendication 11, dans lequel lors de la formation de l'environnement d'exécution isolé, l'application de sécurité est fournie avec un nombre maximum possible d'autorisations et d'accès.

13. Système selon l'une quelconque des revendications 11 à 12, dans lequel la détection des au moins deux environnements d'exécution isolés à l'aide de l'environnement d'exécution isolé de l'application de sécurité est effectuée en détectant au moins deux applications qui sont en cours d'exécution après le lancement de l'application de sécurité.

14. Système selon la revendication 13, le au moins un processeur matériel couplé à la au moins une mémoire étant en outre configuré pour :
- Après la détection des au moins deux applications en cours d'exécution après le lancement de l'application de sécurité, identifier les paramètres de l'environnement d'exécution isolé détecté des au moins deux applications.

15. Système selon l'une quelconque des revendications 11 à 14, dans lequel la formation de l'intégration sécurisée des environnements d'exécution isolés détectés est effectuée par :
- Créer une intégration des environnements d'exécution isolés détectés ;
- Vérifier la présence d'au moins un transit d'accès aux données dans l'intégration créée des environnements d'exécution isolés détectés ; et
- Lorsque le au moins un transit d'accès aux données est identifié, appliquer des restrictions en fonction des options identifiées pour le au moins un transit d'accès aux données identifié en utilisant les règles d'intégration.
